# EUROPÄISCHE PATENTSCHRIFT

(11) **EP 1 068 113 B1**
(45) Veröffentlichungstag und Bekanntmachung des Hinweises auf die Patenterteilung: **20.07.2005**
(21) Anmeldenummer: 99957941.0
(22) Anmeldetag: 28.10.1999
(51) Int. Cl.: B60S 1/52

(54) **DÜSENANORDNUNG SOWIE SCHEIBENWISCHERARM ZUM AUFNEHMEN DER DÜSENANORDNUNG**
NOZZLE DEVICE AND A WINDSHIELD WIPER ARM FOR ACCOMMODATING THE NOZZLE DEVICE
ENSEMBLE BUSES ET BRAS D'ESSUIE-GLACE DESTINE A ABRITER LEDIT ENSEMBLE

(30) Priorität: 08.02.1999 DE 19904964
(43) Veröffentlichungstag der Anmeldung: 17.01.2001
(73) Patentinhaber: ROBERT BOSCH GMBH, 70442 Stuttgart (DE)
(72) Erfinder: FLEISCHER, Claus, D-77815 Buehl (DE)
(86) Internationale Anmeldenummer: PCT/DE1999/003452
(87) Internationale Veröffentlichungsnummer: WO 2000/047456

(56) Entgegenhaltungen:
- EP-A- 0 330 458
- FR-A- 2 684 343
- US-A- 3 149 361
- US-A- 5 842 251

## Beschreibung

### Stand der Technik

Die Erfindung geht von einem Wischarm nach dem Oberbegriff des Anspruchs 1 aus.

Bekannte Scheibenwischer besitzen einen Wischarm, der aus einem Befestigungsteil und einem über ein Abklappgelenk daran angelenkten Gelenkteil mit einer Wischstange aufgebaut ist. Ein hakenförmiges Ende der Wischstange greift in einen Einhängekasten eines Wischblatts, der von zwei Seitenwangen eines Mittelbügels gebildet wird, und umfaßt einen Gelenkbolzen. Das so gebildete Gelenk führt das Wischblatt während der Schwenkbewegung über die Fahrzeugscheibe. Das Wischblatt besitzt ein in der Regel mehrgliederiges Tragbügelsystem mit an dem Mittelbügel angelenkten, untergeordneten Bügeln, von denen zumindest einige mit Krallen an ihren Enden eine Wischleiste an deren Kopfleiste halten. Das mehrgliederige Tragbügelsystem und in die Kopfleiste eingelegte Federschienen ermöglichen, daß sich beim Wischen die Wischleiste mit einem gleichmäßigen Auflagedruck einer gebogenen Windschutzscheibe anpaßt. Zu diesem Zweck spannt eine Zugfeder das Abklappgelenk vor.

Solche Scheibenwischer sind z.B. aus der DE 37 44 237 A1 bekannt. Bei vereinfachten Ausführungen können untergeordnete Bügel, auch Zwischenbügel und Krallenbügel genannt, entfallen. Im einfachsten Fall besitzt der Mittelbügel selbst Krallen, mit denen er die Wischleiste hält.

Scheibenwaschanlagen für Fahrzeuge werden in der Regel in Verbindung mit Scheibenwischern verwendet. Sie werden betätigt, wenn die Feuchtigkeit durch Niederschläge nicht ausreicht, um die Fahrzeugscheibe zu säubern. Sie beinhalten einen Wasserbehälter, Spritzdüsen und eine Pumpe, die Wasser, dem unter Umständen Reinigungs- und Antigefriermittel beigesetzt sind, mit Druck aus dem Wasserbehälter zu den Spritzdüsen fördert.

Es ist bereits bekannt, Spritzdüsen als zusätzliche Bauteile am Wischblatt zu befestigen und somit das Spritzwasser direkt mit kurzer Strahllänge auf den Wischbereich zu verteilen. Da das Spritzwasser auf einen Bereich in der Nähe des Wischblatts konzentriert ist und durch die Wischbewegung in kürzester Zeit wieder abgewischt wird, ist die Sicht durch das aufgebrachte Spritzwasser nur kurzzeitig behindert. Ein Nachteil solcher Systeme ist, daß Witterungseinflüsse, insbesondere Hagel und extreme Sonneneinwirkung die flexiblen Teile dieser Anordnung, die zum Überbrücken der gelenkigen Bereiche zwischen Wischarm und Wischblatt notwendig sind, stark beeinflussen. Ferner frieren die Spritzdüsen und Wasserleitungen, die dem Fahrtwind ausgesetzt sind, bei Temperaturen unter dem Gefrierpunkt schnell zu, wenn nicht genügend Antigefriermittel dem Wasser zugemischt ist. Eingefrorene Wasserleitungen und Spritzdüsen sind in der Regel nur mit großem Aufwand wieder aufzutauen.

Es ist ferner bekannt, Spritzdüsen fest in den Wischarm zu integrieren, beispielsweise in das Anschlußstück zum Wischblatt oder in das auf der Antriebswelle befestigte Befestigungsteil. Fallen die Spritzdüsen oder die Wasserzuleitungen durch Verstopfen, Bruch oder dergleichen aus, muß der komplette Wischarm ausgetauscht werden.

In der älteren Patentanmeldung DE 198 15 171.3, die den Oberbegriff der Ansprüche 1 und 2 zeigt, ist ein Wischarm beschrieben, an dessen Gelenkteil bzw. an einer mit dem Gelenkteil einstückig verbundenen Wischstange Spritzdüsen angeordnet sind. Diese befinden sich in einem Düsenkörper, der in einer Ausbuchtung des Gelenkteils mit einer Spritzöffnung für den Spritzstrahl untergebracht oder in einer seitlichen Halterung an der Wischstange nach unten vorstehend eingeklipst ist. Es können auch zwei Düsenkörper vorgesehen werden, die durch ein starres oder flexibles Verbindungsstück miteinander verbunden sind. Die Düsenkörper sind leicht austauschbar und gegenüber Umwelteinflüssen gut geschützt.

In die Anordnung der Spritzdüsen ist eine Heizeinrichtung integriert, die drahtförmig durch eine Wasserzuführung geführt und im Düsenkörper als Heizwendel ausgebildet ist. Einfache Lösungen ergeben sich hier dadurch, daß die Düsenkörper einstückig miteinander verbunden und als Spritzgußteil aus Kunststoff hergestellt sind. Durch die am Wischarm verteilten Düsenkörper wird das Spritzwasser gut über den Wischbereich verteilt, insbesondere wenn ein Spritzstrahl in einen unteren Bereich direkt vor das Wischblatt gelenkt wird. Da sich durch die Anordnung kurze Strahllängen ergeben, kann der Fahrtwind selbst bei höherer Fahrgeschwindigkeit die Spritzwasserverteilung nur wenig beeinflussen. Wegen ihrer unterschiedlichen Befestigung am Gelenkteil bzw. an der Wischstange sind die Düsenkörper grundsätzlich unterschiedlich gestaltet, so daß für die unterschiedlichsten Wischarme zahlreiche Varianten von Düsenkörpern zur Verfügung gestellt werden müssen. Ferner sind die Anordnung der Spritzdüsen und die Ausrichtung der Spritzstrahlen durch die Form und Richtung des Gelenkteils zum Wischblatt begrenzt.

Die USA-3, 149,361 offenbart einen Wischarm, der aus einem Befestigungsteil und einem über ein Abklappgelenk daran angelegten Gelenkteil mit einer Wischstange aufgebaut ist, an der ein Wischblatt angelenkt ist, wobei das Gelenkteil ein rohrförmige Profil hat und mindestens eine Spritzdüse trägt, wobei die Spritzdüse in einen unteren Teil eines Düsenkörpers eingebracht ist, der in das rohrförmige Profil eingesetzt ist und mit dem unteren Teil zum Wischfeld hin vorsteht. Diesem Wischarm haftete der Nachteil an, dass die Montage und die zielgenaue Ausrichtung der Spritzdüse aufwändig ist.

### Vorteile der Erfindung

Nach der Erfindung sind die Spritzdüsen in einen unteren Teil eines Düsenkörpers eingelassen, der in das u-förmige Profil des Wischarms eingesetzt ist. Der untere Teil des Düsenkörpers steht zum Wischfeld hin aus dem Gelenkteil bzw. der Wischstange vor. Er dient vor allem zur Anordnung der Spritzdüsen und ist weitgehend unabhängig von der jeweiligen Gestaltung des Wischarms bzw. der angeformten Wischstange. Dabei können die Spritzdüsen an der in Startrichtung des Wischarms liegenden Längsseite als auch an der in Längsrichtung des Wischarms liegenden Stirnseite und/oder an der Bodenseite des Düsenkörpers angeordnet sein. Von ihren Spritzstrahlen ist zweckmäßigerweise mindestens einer unter einem kleinen Winkel α zu dem Wischblatt ausgerichtet und trifft das Wischfeld im Bereich des Innenkreises des Wischblatts. Die Anordnung einer Spritzdüse an der Stirnseite oder der Bodenseite sind besonders vorteilhaft bei Scheibenwischern, bei denen der Wischarm in Startrichtung versetzt zum Wischblatt liegt. Die Spritzstrahlen können somit annähernd parallel zum Wischblatt ausgerichtet werden. Sie sind dabei an einer Seite durch das Wischblatt und von oben durch das Gelenkteil und die Wischstange gegenüber dem Fahrtwind geschützt und erreichen das Wischfeld mit einer kurzen Strahllänge, so daß der Fahrtwind die Spritzwasserverteilung über das Wischfeld kaum beeinflußt.

Der obere Teil des Düsenkörpers dient zu seiner Halterung in dem u-förmigen Profil des Gelenkteils bzw. der integrierten Wischstange, wobei der Düsenkörper an seinen Längsseiten Anlageflächen aufweist, mit denen er an den Stirnseiten der Seitenwände des u-förmigen Profils anliegt. Der Düsenkörper kann durch Kraftschluß im u-förmigen Profil gehalten werden, indem sich eine seitliche Federzunge an der Seitenwand des Gelenkteils abstützt und den Düsenkörper gegen die gegenüberliegende Seitenwand drückt. Die Federzunge kann so gestaltet werden, daß der Düsenkörper für verschiedene Breiten des u-förmigen Profils geeignet ist und auch in bereits bestehende Scheibenwischer nachgerüstet werden kann.

Der Kraftschluß kann durch einen Formschluß ersetzt oder ergänzt werden, indem die Federzunge in eine Öffnung der Seitenwand einrastet oder hinter einen Absatz greift, den die benachbarte Seitenwand des Gelenkteils im Bereich des Düsenkörpers aufweist. Dieser Absatz kann durch einen nach innen umgebogenen Teil der Seitenwand des Gelenkteils bzw. der Wischstange gebildet sein. An der der Federzunge gegenüberliegenden Seite liegt der Düsenkörper zweckmäßigerweise mit einer in Längsrichtung verlaufenden Wulst an der Seitenwand an. Durch die linienförmige Anlage kann sich der Düsenkörper unabhängig etwaiger Winkeltoleranzen am u-förmigen Profil bündig mit seinen Auflageflächen an den Seitenwänden des Gelenkteils bzw. der Wischstange anlegen.

Grundsätzlich reicht es aus, wenn nur ein Düsenkörper im Bereich des Gelenkteils angeordnet ist. Zur besseren Verteilung des Spritzwassers sind jedoch zwei Düsenkörper vorteilhaft, die entweder mit Abstand zueinander in einem langen Gelenkteil untergebracht sind oder von denen einer im Gelenkteil und der andere in einer Wischstange angeordnet ist, die einstückig an dem Gelenkteil angeformt ist.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Scheibenwischer mit einem Wischarm und einem Wischblatt in einer Draufsicht,
- Fig. 2: einen Scheibenwischer in einer perspektivischen Darstellung mit einem abgeklappten Wischblatt,
- Fig. 3: einen Düsenkörper in einer perspektivischen Darstellung,
- Fig. 4: eine Ansicht entsprechend des Pfeils IV in Fig. 3,
- Fig. 5: eine Variante zu Fig. 4 und
- Fig. 6: eine weitere Variante zu Fig. 4.

### Beschreibung der Ausführungsbeispiele

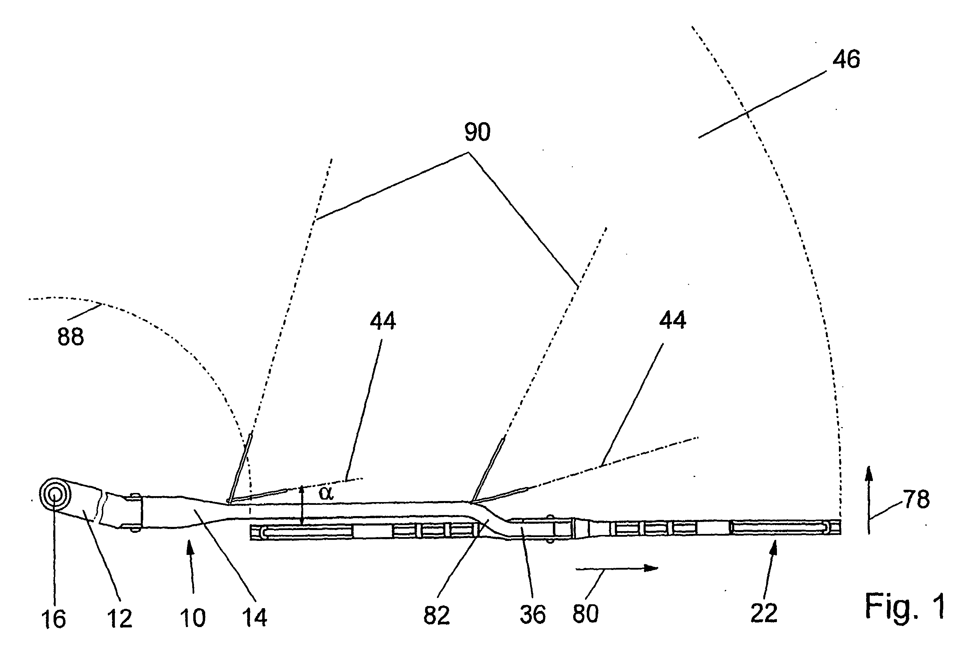

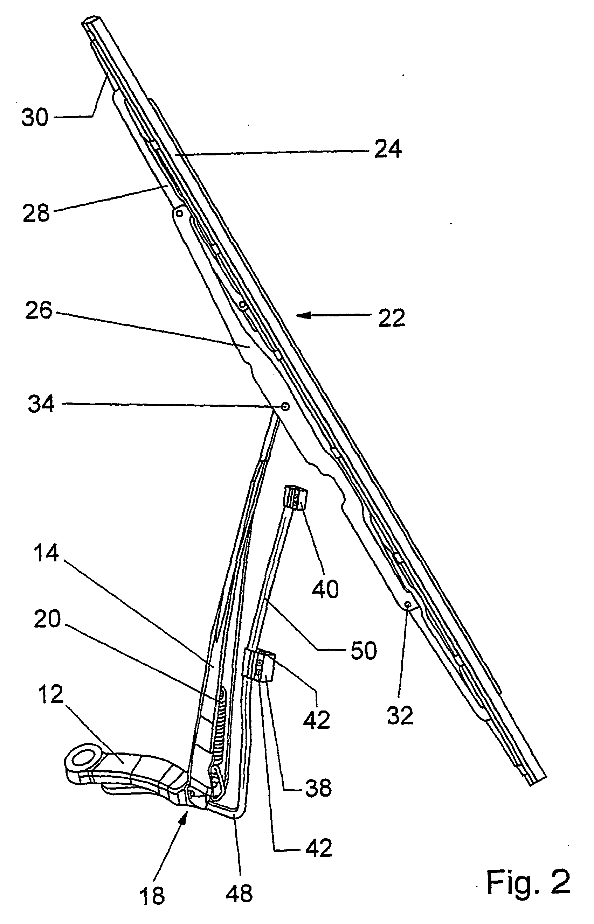

Der Scheibenwischer nach Fig. 1 und 2 besitzt einen Wischarm 10, der ein Wischblatt 22 über ein Wischfeld 46 auf einer Windschutzscheibe führt. Der Wischarm 10 ist aus einem Befestigungsteil 12, das auf einer Antriebswelle 16 befestigt ist, und aus einem Gelenkteil 14 mit einer Wischstange 36 aufgebaut. Das Gelenkteil 14 ist über ein Abklappgelenk 18 an dem Befestigungsteil 12 angelenkt, das über eine am Befestigungsteil 12 und am Gelenkteil 14 angreifende Zugfeder 20 vorgespannt ist. Die Zugfeder 20 drückt somit einerseits das Wischblatt 22 über den Wischarm 10 gegen das Wischfeld 46 und hält andererseits das Gelenkteil 14 mit der Wischstange 36 in einer abgeklappten Stellung, um das Wischblatt 22 reinigen oder wechseln zu können.

Das Wischblatt 22 besitzt einen Mittelbügel 26, Zwischenbügel 28 und Krallenbügel 30, die eine Wischleiste 24 halten. Die genannten Bügel 26, 28 und 30 sind gelenkig über Gelenkstifte 32 miteinander verbunden, so daß sich die Wischleiste 24 einer Krümmung des Wischfelds 46 anpassen kann. Die Wischstange 36, die zweckmäßigerweise einstückig an das Gelenkteil 14 angeformt ist, umfaßt mit einem Ende einen Gelenkbolzen 34 im Mittelbügel 26 und bildet so mit diesem ein Gelenk.

Das Gelenkteil 14 und die angeformte Wischstange 36 haben ein zum Wischfeld 46 hin offenes u-förmiges Profil, in das von unten zwei Düsenkörper 38, 40 eingesetzt sind. Der Düsenkörper 38 ist im Bereich des Gelenkteils 14 hinter der Zugfeder 20 angeordnet, während der Düsenkörper 40 im Bereich der Wischstange 36 an dem Ende eingesetzt ist, der dem Gelenkbolzen 34 nahe liegt. Die Düsenkörper 38, 40 sind durch ein flexibles oder starres Verbindungsstück 50 miteinander verbunden und können leicht ersetzt oder nachgerüstet werden.

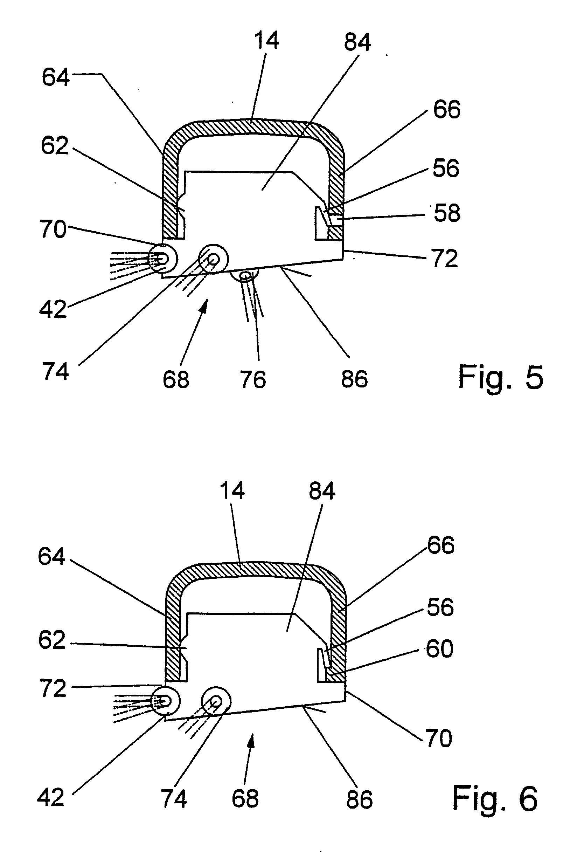

Sie greifen mit einem Teil zwischen die Seitenwände 64, 66 des u-förmigen Profils, während ein unterer Teil 68, der Spritzdüsen 42, 74 und 76 aufweist, aus dem Profil zum Wischfeld 46 hin vorsteht. Dadurch können die Spritzdüsen 42, 74, 76 unabhängig von der Richtung und Gestaltung des Gelenkteils 14 freizügig angeordnet und ausgerichtet werden, beispielsweise an einer Seite 70 in Längsrichtung 80 des Wischblatts 22 und/oder an einer Stirnseite 84 und/oder an einer Bodenseite 86 (Fig.5). Die Anordnung der Spritzdüse 76 an der Bodenseite 86 des Düsenkörpers 38, 40 ist besonders zweckmäßig, wenn das Gelenkteil 14 und/oder die Wischstange 36 mindestens teilweise in Startrichtung 78 des Wischarms 10 versetzt zum Wischblatt 22 verläuft. In diesem Fall kann ein Spritzstrahl 44 der Spritzdüse 74 annähernd parallel zum Wischblatt 22 gerichtet werden und das Wischfeld 46 mit kurzer Strahllänge treffen. Da zudem der Spritzstrahl 44 von oben durch das Gelenkteil 14 und/oder durch die Wischstange 36 geschützt ist, wird er vom Fahrtwind selbst bei höheren Geschwindigkeiten kaum beeinflußt. Die Lage des Wischarms 10 relativ zum Wischblatt 22 kann beispielsweise durch eine Kröpfung 82 der Wischstange 36 erreicht werden.

An den Seiten 40, 70, 86 der Düsenkörper 38, 40 können jeweils ein oder mehrere Spritzdüsen 42, 74, 76 mit ein oder mehreren Spritzstrahlen 44, 90 vorgesehen werden. Zweckmäßigerweise sollte aber mindestens ein Spritzstrahl 44 einen nur kleinen Winkel α zur Längsrichtung 80 des Wischblatts 22 bilden und in der Nähe eines Innenkreises 88 des Wischblatts 22 auf das Wischfeld 46 treffen.

Die Spritzdüsen 42 sind vorteilhaft auf der Seite 70 des Düsenkörpers 38, 40 angeordnet, die in Startrichtung 78 des Wischarms 10 liegt, so daß das Wischfeld 46 bereits beim Start des Wischarms 10 benetzt wird. Ferner ist die Seite 70 breiter ausgeführt werden, so daß sie mehr vorsteht als die gegenüberliegende Seite 72 und so für die Anordnung der Spritzdüsen 42 mehr Platz bietet. Das Gelenkteil 14 bzw. die Wischstange 36 kann entsprechend geschränkt sein, um die Bodenseite 86 etwa parallel zum Wischfeld 46 zu führen und die Oberseite des Gelenkteils 14 gegen den Fahrtwind zu neigen.

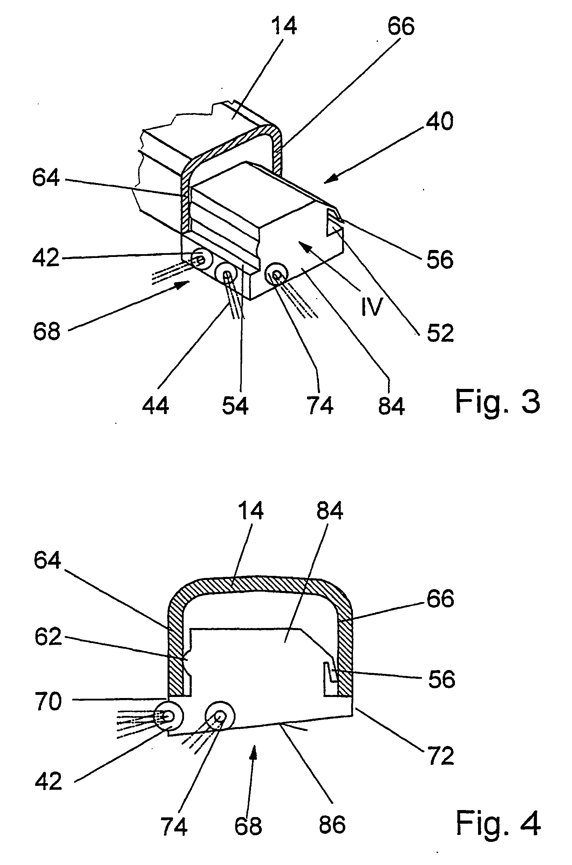

Die Düsenkörper 38, 40 werden in dem u-förmigen Profil des Gelenkteils bzw. der Wischstange 36 kraftschlüssig gehalten (Fig. 4), indem eine Federzunge 56, die sich an einer Seitenwand 66 des u-förmigen Profils abstützt, den Düsenkörper 38, 40 gegen die gegenüberliegende Seitenwand 64 drückt. Der Kraftschluß wird bei der Ausführung nach Fig. 5 durch einen Formschluß unterstützt, indem die Federzunge 56 in eine Öffnung 58 der Seitenwand 66 greift. Nach Fig. 6 wird ein ergänzender Formschluß dadurch gebildet, daß die Federzunge 56 hinter einen nach innen gerichteten Absatz 60 der Seitenwand 66 greift. Der Absatz 60 kann dadurch hergestellt werden, daß ein Teil der Seitenwand 66 nach innen abgekantet wird.

Der Düsenkörper 38, 40 weist an der Seite in Längsrichtung 80 eine Wulst 62 auf. Die so gebildete linienförmige Anlage an der Seitenwand 64 erlaubt ein Verschwenken des Düsenkörpers 38, 40 um die Längsachse, so daß unabhängig von Winkeltoleranzen an dem Gelenkteil 14 bzw. an der Wischstange 36 der Düsenkörper 38, 40 mit seinen Anlageflächen 52, 54 bündig an den Seitenwänden 64 und 66 anliegt und zum Gelenkteil 14 bzw. zur Wischstange 36 ausgerichtet wird.

### Bezugszeichen

- 10: Wischarm
- 12: Befestigungsteil
- 14: Gelenkteil
- 16: Antriebswelle
- 18: Abklappgelenk
- 20: Zugfeder
- 22: Wischblatt
- 24: Wischleiste
- 26: Mittelbügel
- 28: Zwischenbügel
- 30: Krallenbügel
- 32: Gelenkstift
- 34: Gelenkbolzen
- 36: Wischstange
- 38: Düsenkörper
- 40: Düsenkörper
- 42: Spritzdüse
- 44: Spritzstrahl
- 46: Wischfeld
- 48: Wasserleitung
- 50: Verbindungsstück
- 52: Anlagefläche
- 54: Anlagefläche
- 56: Federzunge
- 58: Öffnung
- 60: Absatz
- 62: Wulst
- 64: Seitenwand
- 66: Seitenwand
- 68: unterer Teil des Düsenkörpers
- 70: Seite
- 72: Seite
- 74: Spritzdüse
- 76: Spritzdüse
- 78: Startrichtung
- 80: Längsrichtung
- 82: Kröpfung
- 84: Stirnseite
- 86: Bodenseite
- 88: Innenkreis
- 90: Spritzstrahl

## Patentansprüche

1. Wischarm (10), der aus einem Befestigungsteil (12) und einem über ein Abklappgelenk (18) daran angelenkten Gelenkteil (14) mit einer Wischstange (36) aufgebaut ist, an der ein Wischblatt (22) angelenkt ist, wobei das Gelenkteil (14) ein zu einem Wischfeld (46) hin offenes, u-förmiges Profil hat und mindestens eine Spritzdüse (42) trägt, die in einen unteren Teil (68) eines Düsenkörpers (38, 40) eingebracht ist, der in das u-förmige Profil eingesetzt ist und mit dem unteren Teil (68) zum Wischfeld (46) hin vorsteht, **dadurch gekennzeichnet, dass** der Düsenkörper (38, 40) an seinen Längsseiten Anlageflächen (52, 54) aufweist, mit denen er an den Stirnseiten (84) der Seitenwände (64, 66) des u-förmigen Profils anliegt.

2. Wischarm (10), der aus einem Befestigungsteil (12) und einem über ein Abklappgelenk (18) daran angelenkten Gelenkteil (14) mit einer Wischstange (36) aufgebaut ist, an der ein Wischblatt (22) angelenkt ist, wobei das Gelenkteil (14) ein zu einem Wischfeld (46) hin offenes, u-förmiges Profil hat und mindestens eine Spritzdüse (42) trägt, die in einen unteren Teil (68) eines Düsenkörpers (38, 40) eingebracht ist und auf der in Startrichtung (78) des Wischarms (10) liegenden Seite des Düsenkörpers (38, 40) angeordnet ist **dadurch gekennzeichnet, dass** der Düsenkörper in das u-förmige Profil eingesetzt ist und mit dem unteren Teil (68) zum Wischfeld (46) hin vorsteht.

3. Wischarm (10) nach Anspruch 1, **dadurch gekennzeichnet, daß** die Spritzdüse (38, 40) auf der in Startrichtung (78) des Wischarms (10) liegenden Seite des Düsenkörpers (38, 40) angeordnet ist.

4. Wischarm (10) nach Anspruch 3, **dadurch gekennzeichnet, daß** der aus dem Gelenkteil (14) vorstehende Teil an der Seite (70) mit der Spritzdüse (42) weiter vorsteht als an der gegenüberliegenden Seite (72).

5. Wischarm (10) nach einem der vorhergehenden Ansprüche, **dadurch gekennzeichnet, daß** die Spritzdüse (38, 40) mit mindestens einem Spritzstrahl (44) einen kleinen Winkel (α), von vorzugsweise kleiner 45°, zur Längsrichtung des Wischblatts (22) einschließt.

6. Wischarm (10) nach einem der vorhergehenden Ansprüche, **dadurch gekennzeichnet, daß** der Düsenkörper (38, 40) mit einer seitlichen Federzunge (56) an der Seitenwand (64) des Gelenkteils (14) gehalten ist.

7. Wischarm (10) nach Anspruch 6, **dadurch gekennzeichnet, daß** die Federzunge (56) in eine Öffnung (58) der Seitenwand (64) einrastet.

8. Wischarm (10) nach Anspruch 6, **dadurch gekennzeichnet, daß** die Seitenwand (66) des Gelenkteils (14) im Bereich des Düsenkörpers (38, 40) einen nach innen gerichteten Absatz (60) aufweist, hinter den die Federzunge (56) greift.

9. Wischarm (10) nach einem der Ansprüche 6 bis 8, **dadurch gekennzeichnet, daß** der Düsenkörper (38, 40) auf der Seite, die der Federzunge (56) gegenüberliegt mit einer in Längsrichtung verlaufenden Wulst (62) an der Seitenwand (64) anliegt.

10. Wischarm (10) nach einem der vorhergehenden Ansprüche, **dadurch gekennzeichnet, daß** die Wischstange (36) an dem Gelenkteil (14) angeformt und ein Düsenkörper (40) in die Wischstange (36) eingesetzt ist.

11. Wischarm (10) nach Anspruch 10, **dadurch gekennzeichnet, daß** im Gelenkteil (14) ein Düsenkörper (38) vorgesehen und mit dem Düsenkörper (40) in der Wischstange (36) starr verbunden ist.

12. Wischarm (10) nach einem der vorhergehenden Ansprüche, **dadurch gekennzeichnet, daß** er in Startrichtung (78) versetzt zum Wischblatt (22) verläuft.

13. Wischarm (10) nach Anspruch 12, **dadurch gekennzeichnet, daß** die Wischstange (36) gekröpft ist.

14. Wischarm (10) nach Anspruch 12 oder 13, **dadurch gekennzeichnet, daß** der Düsenkörper (38, 40) an seiner Bodenseite eine Spritzdüse (76) aufweist.

15. Wischarm (10) nach einem der vorhergehenden Ansprüche, **dadurch gekennzeichnet, daß** der Düsenkörper an seiner in Längsrichtung (80) weisenden Stirnseite (84) eine Spritzdüse (74) aufweist.

## Claims

1. Wiper arm (10) which is constructed from a fastening part (12) and an articulated part (14), which is coupled thereto via a fold-down joint (18) and has a wiper rod (36), to which a wiper blade (22) is coupled, the articulated part (14) having a U-shaped profile, which is open towards a wiping area (46), and bearing at least one spray nozzle (42) which is placed into a lower part (68) of a nozzle body (38, 40) which is inserted into the U-shaped profile and projects with the lower part (68) towards the wiping area (46), **characterized in that** the nozzle body (38, 40) has, on its longitudinal sides, bearing surfaces (52, 54) with which it bears against the end sides (84) of the side walls (64, 66) of the U-shaped profile.

2. Wiper arm (10) which is constructed from a fastening part (12) and an articulated part (14), which is coupled thereto via a fold-down joint (18) and has a wiper rod (36), to which a wiper blade (22) is coupled, the articulated part (14) having a U-shaped profile, which is open towards a wiping area (46), and bearing at least one spray nozzle (42) which is placed into a lower part (68) of a nozzle body (38, 40) and is arranged on that side of the nozzle body (38, 40) which is situated in the starting direction (78) of the wiper arm (10), **characterized in that** the nozzle body is inserted into the U-shaped profile and projects with the lower part (68) towards the wiping area (46).

3. Wiper arm (10) according to Claim 1, **characterized in that** the spray nozzle (38, 40) is arranged on that side of the nozzle body (38, 40) which is situated in the starting direction (78) of the wiper arm (10).

4. Wiper arm (10) according to Claim 3, **characterized in that** the part projecting from the articulated part (14) projects further on the side (70) having the spray nozzle (42) than on the opposite side (72).

5. Wiper arm (10) according to one of the preceding claims, **characterized in that** the spray nozzle (38, 40) encloses with at least one spray jet (44) a small angle (α), of preferably smaller than 45°, with respect to the longitudinal direction of the wiper blade (22).

6. Wiper arm (10) according to one of the preceding claims, **characterized in that** the nozzle body (38, 40) is held on the side wall (64) of the articulated part (14) by a lateral spring tongue (56).

7. Wiper arm (10) according to Claim 6, **characterized in that** the spring tongue (56) latches into an opening (58) of the side wall (64).

8. Wiper arm (10) according to Claim 6, **characterized in that** the side wall (66) of the articulated part (14) has, in the region of the nozzle body (38, 40), an inwardly directed offset (60) behind which the spring tongue (56) reaches.

9. Wiper arm (10) according to one of Claims 6 to 8, **characterized in that** the nozzle body (38, 40), on the side lying opposite the spring tongue (56), bears with a bead (62) running in the longitudinal direction against the side wall (64).

10. Wiper arm (10) according to one of the preceding claims, **characterized in that** the wiper rod (36) is integrally formed on the articulated part (14) and a nozzle body (40) is inserted into the wiper rod (36).

11. Wiper arm (10) according to Claim 10, **characterized in that** a nozzle body (38) is provided in the articulated part (14) and is connected rigidly to the nozzle body (40) in the wiper rod (36).

12. Wiper arm (10) according to one of the preceding claims, **characterized in that** it runs offset in the starting direction (78) with respect to the wiper blade (22).

13. Wiper arm (10) according to Claim 12, **characterized in that** the wiper rod (36) is bent.

14. Wiper arm (10) according to Claim 12 or 13, **characterized in that** the nozzle body (38, 40) has a spray nozzle (76) on its bottom side.

15. Wiper arm (10) according to one of the preceding claims, **characterized in that** the nozzle body has a spray nozzle (74) on its end side (84) pointing in the longitudinal direction (80).

## Revendications

1. Bras d'essuie-glace (10) constitué d'une partie de fixation (12) et d'une partie articulée (14) reliée à la partie de fixation par une articulation rabattable (18) et qui comporte une barrette d'essuie-glace (36) sur laquelle est articulée une lame d'essuyage (22), la partie articulée (14) étant constituée par un profil en forme d'U ouvert en direction de la zone d'essuyage (46) et portant une buse de projection (42) située à la partie inférieure (68) d'un corps de buse (38, 40) monté dans le profilé en forme d'U en faisant saillie par sa partie inférieure (68) en direction de la zone d'essuyage (46),
**caractérisé en ce que**
le corps de buse (38, 40) présente sur ses longs côtés des portées d'appui (52, 54) par lesquelles il repose sur les faces frontales (84) des parois latérales (64, 66) du profilé en forme d'U.

2. Bras d'essuie-glace (10) constitué d'une partie de fixation (12) et d'une partie articulée (14) reliée à la partie de fixation par une articulation rabattable (18) et qui comporte une barrette d'essuie-glace sur laquelle est articulée une lame d'essuyage (22), la partie articulée (14) étant constituée par un profil en forme d'U ouvert en direction de la zone d'essuyage (46) et portant une buse de projection (42) située à la partie inférieure (68) d'un corps de buse (38, 40) et sur le côté de ce corps regardant dans la direction de démarrage (78) du bras d'essuie-glace,
**caractérisé en ce que**
le corps de buse est inséré dans le profilé en forme d'U et fait saillie par sa partie inférieure (68) en direction de la zone d'essuyage (46).

3. Bras d'essuie-glace (10) selon la revendication 1,
**caractérisé en ce que**
la buse de projection (42) est montée sur le côté du corps de buse (38, 40) qui regarde dans la direction de démarrage (78) du bras d'essuie-glace (10).

4. Bras d'essuie-glace (10) selon la revendication 1,
**caractérisé en ce que**
la partie qui fait saillie sur la partie articulée (14) du côté (70) dépasse avec la buse de projection (42) davantage que du côté opposé (72).

5. Bras d'essuie-glace (10) selon une des revendications précédentes,
**caractérisé en ce que**
la buse de projection (42) a au moins un jet de projection (44), qui fait avec la direction longitudinale de la lame d'essuyage (22) un petit angle (α), de préférence inférieur à 45°.

6. Bras d'essuie-glace (10) selon une des revendications précédentes,
**caractérisé en ce que**
le corps de buse (38, 40) est maintenu par une languette élastique latérale (56) sur la paroi latérale (64) de la partie articulée (14).

7. Bras d'essuie-glace (10) selon la revendication 6,
**caractérisé en ce que**
la languette élastique (56) est encliquetée dans une ouverture (58) de la paroi latérale (64).

8. Bras d'essuie-glace (10) selon la revendication 6,
**caractérisé en ce que**
la paroi latérale (65) de la partie articulée (14) présente dans la zone du corps de buse (38, 40) un gradin (60) dirigé vers l'intérieur et derrière lequel est en prise la languette élastique (56).

9. Bras d'essuie-glace (10) selon une des revendications 6 à 8,
**caractérisé en ce que**
le corps de buse (38, 40), du côté opposé à la languette élastique (56), est appliqué sur la paroi latérale (64) par un bourrelet (62) orienté longitudinalement.

10. Bras d'essuie-glace (10) selon une des revendications précédentes,
**caractérisé en ce que**
la barrette d'essuie-glace (36) est formée sur la partie articulée (14) et un corps de buse (40) est inséré dans cette barrette.

11. Bras d'essuie-glace (10) selon la revendication 10,
**caractérisé en ce que**
dans la partie articulée (14) est prévu un corps de buse (38) qui est relié rigidement au corps de buse (40) dans la barrette d'essuie-glace (36).

12. Bras d'essuie-glace (10) selon la revendication précédente,
**caractérisé en ce que**
ce bras est décalé par rapport à la lame d'essuyage dans le sens de démarrage (78).

13. Bras d'essuie-glace (10) selon la revendication 12,
**caractérisé en ce que**
la barrette d'essuie-glace (36) est coudée.

14. Bras d'essuie-glace (10) selon la revendication 10 ou 13,
**caractérisé en ce que**
le corps de buse (38, 40) présente du côté de son fond une buse de projection (76).

15. Bras d'essuie-glace (10) selon une des revendications précédentes,
**caractérisé en ce que**
le corps de buse présente une buse de projection (74) sur sa face frontale (84) regardant dans la direction longitudinale (80).
